# FASCICULE DE BREVET EUROPEEN

(11) **EP 3 204 247 B1**
(45) Date de publication et mention de la délivrance du brevet: **31.10.2018**
(21) Numéro de dépôt: 15770565.8
(22) Date de dépôt: 09.09.2015
(51) Int. Cl.: B60G 7/00

(54) **BRAS DE SUSPENSION DE VÉHICULE AUTOMOBILE**
AUFHÄNGUNGSLENKER FÜR EIN FAHRZEUG
SUSPENSION ARM FOR A MOTOR CAR

(30) Priorité: 08.10.2014 FR 1459630
(43) Date de publication de la demande: 16.08.2017
(73) Titulaire: PSA Automobiles SA, 78300 Poissy (FR)
(72) Inventeur: VUILLIER DEVILLERS, Claude, F-90160 Bessoncourt (FR)
(74) Mandataire: Rosenberg, Muriel Sylvie
(86) Numéro de dépôt international: PCT/FR2015/052399
(87) Numéro de publication internationale: WO 2016/055704

(56) Documents cités:
- DE-A1- 4 322 632
- DE-U- 7 245 258
- FR-E- 82 194
- JP-A- H0 920 115
- US-B2- 8 690 176

## Description

L'invention a trait au domaine des véhicules automobiles. Plus particulièrement, l'invention a trait au domaine des bras de liaison de véhicules, plus particulièrement encore au domaine de la réalisation d'un bras de suspension de véhicule automobile.

Un véhicule automobile comprend généralement des amortisseurs orientés essentiellement verticalement et destinés à amortir les oscillations d'une suspension. La suspension comprend des bras qui assurent une liaison articulée entre la structure du véhicule et les roues. De tels bras articulés de suspension sont généralement orientés transversalement et comprennent des articulations de manière à suivre les mouvements verticaux des roues. De tels bras de suspension sont particulièrement rigides pour résister aux contraintes liées à la conduite du véhicule, particulièrement lors de freinage, accélération, et lors des virages. Une bonne tenue de route du véhicule nécessite, en outre, que la résistance de tels bras de suspension soit alliée à une faible masse. La faible masse est favorable particulièrement pour un usage du véhicule dans des conditions où le bras est soumis à des accélérations importantes. Il est connu de réaliser un bras de suspension, par exemple un triangle de suspension avant, sous la forme d'un corps sensiblement creux.

Le document de brevet US 8,690,176 B2 divulgue un bras de suspension dont le corps creux est formé par l'assemblage de deux parois métalliques. Les bords latéraux de la première paroi sont soudés aux bords latéraux correspondant de la deuxième paroi. La première paroi comprend une portion centrale s'étendant longitudinalement et destinée à être en appui contre la portion centrale longitudinale correspondante de l'autre paroi. L'enseignement est intéressant en ce que le bras de liaison est sensiblement léger. Les portions centrales limitent cependant sa raideur, les différents modes de fixation d'articulations à un tel bras s'en trouvent par ailleurs sensiblement réduits. En outre, le positionnement des deux coquilles lors de leur fixation est hasardeux.

JP H09 20115 A montre un bras de suspension selon le préambule de la revendication 1. L'invention a pour objectif de proposer une solution palliant au moins un des inconvénients de l'état de l'art susmentionné. Plus particulièrement, l'invention a pour objectif de proposer un bras de suspension de faible masse et de raideur satisfaisante pour sa fonction.

L'invention a pour objet un bras de suspension de véhicule automobile comprenant deux demi-coquilles fixées l'une à l'autre suivant un plan moyen de jonction et formant la structure du bras ; remarquable en ce que les deux demi-coquilles comprennent des premiers bords de fixation s'étendant dans le plan moyen de jonction et en contact mutuel dans ledit plan, et des deuxièmes bords de fixation s'étendant transversalement, préférentiellement perpendiculairement, audit plan et en contact mutuel dans leur étendue transversale selon la revendication 1.

Les deuxièmes bords assurent par leur contact mutuel un positionnement relatif des deux demi-coquilles dans le plan moyen de jonction, leur contact mutuel est essentiellement par recouvrement des deuxièmes bords respectifs.

Selon un mode avantageux de l'invention, les premiers bords et/ou deuxièmes bords sont assemblés l'un à l'autre par soudure, préférentiellement par soudure laser. Selon un mode avantageux de l'invention, les deuxièmes bords forment un profil courbe, préférentiellement concave, du bras.

Selon un mode avantageux de l'invention, les premiers bords s'étendent, au moins sur une partie de leur étendue, de manière généralement parallèle aux deuxièmes bords.

Selon un mode avantageux de l'invention, le moment quadratique moyen des sections transversales du bras est compris entre 15000mm⁴ et 22000mm⁴.

Selon l'invention, le bras comprend, en outre, un manchon transversal d'articulation du bras au véhicule, ledit manchon s'étendant à l'intérieur du bras, transversalement au plan moyen de jonction des demi-coquilles, ledit manchon comprenant deux épaulements en butée sur les faces intérieures des deux demi-coquilles. Le manchon peut s'étendre perpendiculairement au plan moyen de jonction des demi-coquilles.

Selon un mode avantageux de l'invention, le manchon comprend à au moins une de ses extrémités une collerette traversant une des demi-coquilles, ladite collerette étant préférentiellement plastiquement repoussée sur la face extérieure de ladite demi-coquille de manière à assurer la fixation dudit manchon à la dite demi-coquille.

Selon un mode avantageux de l'invention, la ou au moins une des collerettes sert de moyen, éventuellement additionnel, de positionnement relatif des deux demi-coquilles dans le plan moyen de jonction.

Selon un mode avantageux de l'invention, le manchon est situé à une première extrémité du bras, chacune des deux demi-coquilles comprenant à la deuxième extrémité dudit bras une portion en contact avec une portion correspondante de l'autre des deux demi-coquilles.

Selon un mode avantageux de l'invention, le bras comprend, en outre, un manchon longitudinal d'articulation du bras au véhicule, ledit manchon s'étendant essentiellement, dans le plan moyen de jonction des deux demi-coquilles.

Selon un mode avantageux de l'invention, chacune des demi-coquilles comprend une portion en forme de patte courbée, le manchon longitudinal étant logé entre lesdites deux portions, ledit manchon étant préférentiellement soudé auxdites portions.

Selon un mode avantageux de l'invention, chacune des portions en forme de patte courbée est fixée au manchon longitudinal sur une surface circulaire correspondant à un secteur compris entre 40° et 70°.

Avantageusement, la fixation des deux demi-coquilles au manchon longitudinal est réalisée par une soudure au laser.

Selon un mode avantageux de l'invention, chacune des demi-coquilles est un embouti de tôle métallique, préférentiellement en acier, avec une résistance à la rupture comprise entre 500MPa/mm² et 1800MPa/mm².

Selon un mode avantageux de l'invention, le bras comprend à une première extrémité un manchon transversal par rapport au plan moyen de jonction apte à recevoir une articulation pour la fixation du bras à la structure du véhicule, le bras comprenant en outre à une deuxième extrémité une rotule pour la fixation du bras à la roue.

Selon un mode avantageux de l'invention, le bras comprend à une première extrémité un manchon transversal pour une première fixation du bras à la structure du véhicule, à une deuxième extrémité une rotule pour la fixation du bras à la roue, et à un niveau intermédiaire situé entre les première et deuxième extrémités, un manchon longitudinal pour une fixation supplémentaire du bras à la structure du véhicule.

Avantageusement, le bras forme un triangle de suspension avec deux fixations du bras à la structure du véhicule et une fixation du bras à la roue.

Avantageusement, le manchon longitudinal forme une articulation avant du triangle, orientée essentiellement selon la direction longitudinale du véhicule.

Avantageusement, le manchon transversal forme une articulation arrière du triangle, orientée essentiellement verticalement.

L'invention a également pour objet un véhicule automobile comprenant un bras de suspension, remarquable en ce que le bras de suspension est conforme à l'invention, le bras étant monté de manière articulée à la structure du véhicule et à une roue dudit véhicule.

Les mesures de l'invention sont intéressantes en ce qu'elles permettent de faciliter la réalisation d'un bras de suspension de faible masse et de raideur satisfaisante pour sa fonction. En effet, le bras est un corps creux dont la structure est réalisée par l'assemblage de deux demi-coquilles selon un plan moyen de jonction, les premiers bords sur un côté des demi-coquilles s'étendant transversalement au plan de jonction et les autres bords sur l'autre côté s'étendant dans le plan moyen lui-même, cette réalisation est légère et permet l'obtention d'un volume intérieur entre les deux demi-coquilles apte à garantir la raideur du bras. Par ailleurs, cette réalisation facilite le positionnement des demi-coquilles l'une par rapport à l'autre lors de leur fixation.

D'autres caractéristiques et avantages de la présente invention seront mieux compris à l'aide de la description et des dessins parmi lesquels :
- La figure 1 est une vue en perspective d'un train roulant de véhicule automobile comprenant des bras de suspension conforme à l'invention ;
- La figure 2 est une vue en perspective du bras de suspension du train roulant de la figure 1 ;
- La figure 3 est une vue en coupe transversale du bras de suspension de la figure 2 ;
- La figure 4 est une vue de dessus du bras de suspension des figures 2 et 3 ;
- La figure 5 est une vue en coupe du bras de suspension de la figure 2 au niveau d'un manchon d'articulation transversal ;
- La figure 6 est une vue du manchon d'articulation transversal avant son montage au bras de suspension de la figure 2 ;

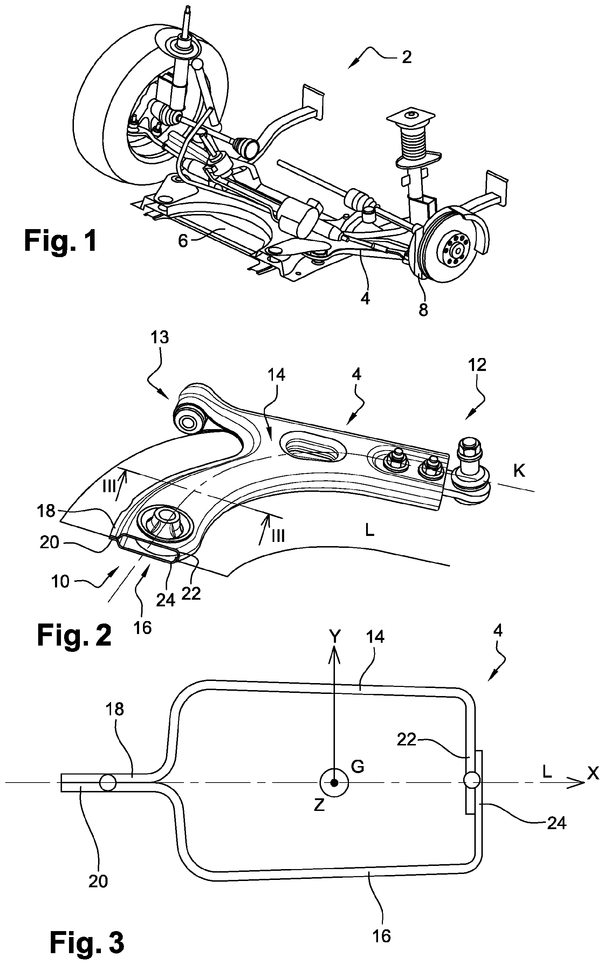

La figure 1 est une vue en perspective d'un train roulant 2 de véhicule automobile comprenant des bras de suspension 4 conforme à l'invention. Chacun des bras de suspension est monté de manière articulée à la structure 6 du véhicule, en l'occurrence au berceau moteur, et à un support 8 de roue du véhicule.

La figure 2 est une vue en perspective d'un bras de suspension 4 conforme à l'invention. Des articulations sont en l'occurrence assemblées au bras de suspension. On peut observer une articulation transversale déformable élastiquement à une première extrémité 10, l'axe de cette articulation étant destiné à être orienté sensiblement verticalement lorsque le bras est monté au véhicule. On peut également observer une rotule assemblée à une deuxième extrémité 12 du bras. On peut également observer une troisième articulation située à un niveau intermédiaire 13 entre les deux extrémités du bras et dont l'axe est destiné à être orienté dans une direction longitudinale lorsque le bras est monté au véhicule. Le bras comprend deux demi coquilles 14 et 16 fixées l'une à l'autre et qui, ensemble, forment la structure du bras 4. Un tel bras doit pouvoir résister aux différents moments de flexion transmis par la roue à la structure du véhicule. Chacune des demi-coquilles 14 et 16 est un embouti de tôle métallique, préférentiellement en acier, avec une résistance à la rupture comprise entre 500MPa/mm² et 1800MPa/mm². Les deux demi-coquilles 14 et 16 sont fixées l'une à l'autre le long de leurs bords de fixation. On peut identifier à gauche de l'image des premiers bords de fixation 18 et 20 qui s'étendent sur un premier côté du bras. On peut également observer à droite de l'image des deuxième bords 22 et 24 qui s'étendent sur le deuxième côté du bras, les deuxièmes bords 22 et 24 formant un profil courbe, préférentiellement concave, du bras 4. Les premiers bords 18 et 20 s'étendent de leur côté de manière généralement parallèle aux deuxièmes bords 22 et 24 et ce au moins sur une partie de leur étendue. Les deux demi-coquilles 14 et 16 du bras sont fixées selon un plan moyen de jonction « L ». Les premiers bords de fixation 18 et 20 s'étendent dans le plan moyen de jonction « L » des deux demi coquilles et sont en contact mutuel dans ce même plan alors que de l'autre côté les deuxièmes bords 22 et 24 de fixation s'étendent transversalement au plan moyen de jonction « L » et sont en contact mutuel dans cette étendue transversale. On peut finalement observer que le bras de suspension peut présenter à ses extrémités 10 et 12 une section ouverte des deux demi-coquilles 14 et 16, la jonction des premiers 18 et 20 et deuxièmes 22 et 24 bords de chaque côté du bras étant interrompue par ces sections ouvertes. On peut observer un axe « K » s'étendant longitudinalement dans le bras.

La figure 3 est une vue en coupe transversale III-III du bras de suspension 4 conforme à l'invention. On peut voir les deux demi coquilles 14 et 16 présentées en relation avec la figure précédente, et observer plus particulièrement le plan moyen de jonction « L » s'étendant dans le plan (X, Z) d'un espace orienté selon les axes d'un trièdre droit (X, Y, Z). G est le centre de gravité dans le plan (X, Y) au niveau de la section représentée du bras 4. On peut observer que les premiers bords de fixation 18 et 20 s'étendent dans le plan moyen de jonction « L » des deux demi-coquilles 14 et 16 et sont en contact mutuel dans ce même plan, alors qu'à l'opposé les deuxièmes bords de fixation 22 et 24 s'étendent perpendiculairement au plan moyen de jonction « L » et sont en contact mutuel dans cette étendue perpendiculaire. Le moment quadratique I_{G}, somme des moments d'inertie en flexion I_{GY} et I_{GZ} selon les axes Y et Z, respectivement, peut être compris pour un tel bras 4 entre 15000mm⁴ et 22000mm⁴ selon la section du bras ; la géométrie du bras 4 est ainsi favorable à sa raideur. Les deuxièmes bords 22 et 24 assurent par leur contact mutuel un positionnement relatif des deux demi-coquilles dans le plan moyen de jonction « L », leur contact mutuel est essentiellement par recouvrement des deuxièmes bords respectifs. Les premiers bords et/ou deuxième bords peuvent être assemblés l'un à l'autre par soudure au laser. Le moyen de fixation par soudure au laser ne limite en rien l'invention, il est cependant favorable à la rapidité de fabrication du bras.

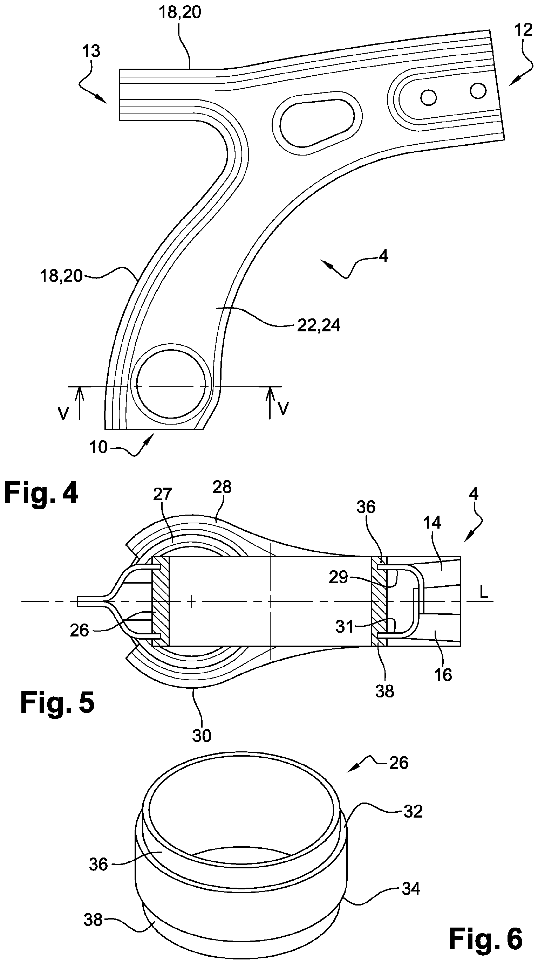

La figure 4 est une vue de dessus du bras de suspension 4 conforme à l'invention. Le bras est en l'occurrence représenté sans les articulations aptes à l'assembler au véhicule. Cette vue est intéressante en ce qu'elle permet de visualiser les premiers bords 18 et 20 du bras dans un mode particulier de réalisation. Les premiers bords 18 et 20 s'étendent entre la première extrémité 10 et la position intermédiaire 13 pour la fixation de la troisième articulation ; les premiers bords 18 et 20 s'étendent également entre cette position intermédiaire de fixation et la deuxième extrémité 12 du bras. De l'autre côté, les deuxièmes bords 22 et 24 s'étendent directement, préférentiellement de manière continue, entre les première 10 et deuxième 12 extrémités du bras.

La figure 5 est une vue en coupe du bras de suspension 4 au niveau de l'articulation transversale située à la première extrémité dudit bras. Seul un manchon 26 de cette articulation est représenté sur cette vue en coupe. On peut également voir en arrière-plan l'articulation longitudinale située au niveau intermédiaire du bras, celui-là comprenant un manchon 27 qui s'étend essentiellement, dans le plan moyen de jonction « L » des deux demi-coquilles 14 et 16. Le manchon transversal 26 s'étend à l'intérieur du bras, transversalement au plan moyen de jonction « L » des deux demi-coquilles. Le manchon 26 comprend deux épaulements contre lesquels les faces intérieures 29 et 31 des deux demi-coquilles entrent en butée lors de leur assemblage. Le manchon 26 comprend également à chacune de ces extrémités une collerette 36 et 38 traversant chacune des demi-coquilles 14 et 16, les collerettes étant repoussées sur la face extérieure des demi-coquilles ce qui assure la fixation du manchon 26 aux demi-coquilles. Les collerettes peuvent servir de moyen additionnel de positionnement relatif des deux demi-coquilles 14 et 16 dans le plan moyen de jonction « L ». Le manchon 26 étant situé à la première extrémité du bras, le positionnement des deux demi-coquilles 14 et 16 selon la direction perpendiculaire au plan moyen de jonction « L » peut être facilité à l'autre extrémité du bras par une portion (non représentée) d'une demi-coquille, préférentiellement centrale, en contact avec une portion correspondante de l'autre des deux demi-coquilles. Revenant à l'articulation longitudinale en arrière-plan, celle-là même située au niveau intermédiaire du bras, elle est ici réalisée sous la forme d'un manchon logé entre deux portions 28 et 30 en forme de patte courbée des demi-coquilles 14 et 16, et préférentiellement fixé par soudure laser au travers de ces portions 28 et 30.

La figure 6 est une vue du manchon transversal 26 vu en relation avec la figure précédente, il est cependant représenté dans son état non déformé avant l'assemblage aux demi-coquilles du bras de suspension. On peut voir les deux épaulements 32 et 34 aptes à recevoir les faces intérieures des deux demi-coquilles, on peut également voir les deux collerettes 36 et 38 destinées à traverser chacune des demi-coquilles et à être repoussées plastiquement sur les faces supérieures des demi-coquilles.

## Revendications

1. Bras de suspension (4) de véhicule automobile comprenant deux demi-coquilles (14, 16) fixées l'une à l'autre suivant un plan moyen de jonction (L) et formant la structure du bras (4), dans lequel les deux demi-coquilles (14, 16) comprennent des premiers bords de fixation (18, 20) s'étendant dans le plan moyen de jonction (L) et en contact mutuel dans ledit plan, et des deuxièmes bords de fixation (22, 24) s'étendant transversalement, préférentiellement perpendiculairement, audit plan (L) et en contact mutuel dans leur étendue transversale,
**caractérisé en ce qu'**il comprend, en outre, un manchon transversal (26) d'articulation du bras (4) au véhicule, ledit manchon s'étendant à l'intérieur du bras, transversalement au plan moyen de jonction (L) des demi-coquilles, ledit manchon (26) comprenant deux épaulements (32, 34) en butée sur les faces intérieures (29 ; 31) des deux demi-coquilles (14, 16).

2. Bras de suspension (4) selon la revendication 1, **caractérisé en ce que** les premiers bords (18, 20) et/ou deuxième bords (22, 24) sont assemblés l'un à l'autre par soudure, préférentiellement par soudure laser.

3. Bras de suspension (4) selon l'une des revendications 1 et 2, **caractérisé en ce que** les deuxièmes bords (22, 24) forment un profil courbe, préférentiellement concave, du bras (4).

4. Bras de suspension (4) selon l'une des revendications 1 à 3, **caractérisé en ce que** les premiers bords (18, 20) s'étendent, au moins sur une partie de leur étendue, de manière généralement parallèle aux deuxièmes bords (22, 24).

5. Bras de suspension (4) selon l'une quelconque des revendications précédentes, **caractérisé en ce que** le manchon (26) comprend à au moins une de ses extrémités une collerette (36 ; 38) traversant une des demi-coquilles (14 ; 16), ladite collerette étant préférentiellement repoussée plastiquement sur la face extérieure de ladite demi-coquille de manière à assurer la fixation dudit manchon (26) à ladite demi-coquille.

6. Bras de suspension (4) selon l'une quelconque des revendications précédentes, **caractérisé en ce que** le manchon (26) est situé à une première extrémité (10) du bras, chacune des deux demi-coquilles (14, 16) comprenant à la deuxième extrémité (12) dudit bras une portion en contact avec une portion correspondante de l'autre des deux demi-coquilles.

7. Bras de suspension (4) selon l'une des revendications 1 à 6, **caractérisé en ce qu'**il comprend, en outre, un manchon longitudinal d'articulation (27) du bras au véhicule, ledit manchon s'étendant essentiellement, dans le plan moyen de jonction (L) des deux demi-coquilles (14, 16).

8. Bras de suspension (4) selon la revendication 7, **caractérisé en ce que** chacune des demi-coquilles (14, 16) comprend une portion (28, 30) en forme de patte courbée, le manchon longitudinal (27) étant logé entre lesdites deux portions, ledit manchon étant préférentiellement soudé auxdites portions (28, 30).

9. Véhicule automobile comprenant un bras de suspension (4), **caractérisé en ce que** le bras de suspension est conforme à l'une des revendications 1 à 8, le bras (4) étant monté de manière articulée à la structure (6) du véhicule et à une roue dudit véhicule.

## Patentansprüche

1. Aufhängungslenker (4) für Kraftfahrzeug, der zwei Halbschalen (14, 16) umfasst, die aneinander entlang einer mittleren Verbindungsebene (L) befestigt sind und die Struktur des Lenkers (4) bilden, wobei die zwei Halbschalen (14, 16) erste Befestigungsränder (18, 20) umfassen, die sich in der mittleren Verbindungsebene (L) und in gegenseitiger Berührung in der Ebene erstrecken, und sich die zweiten Befestigungsränder (22, 24) bevorzugt senkrecht zu der Ebene (L) und in gegenseitiger Berührung in ihrer Querausdehnung erstrecken,
**dadurch gekennzeichnet, dass** er außerdem eine Queranlenkungshülse (26) des Lenkers (4) an dem Fahrzeug umfasst, wobei sich die Hülse in dem Inneren des Lenkers quer zu der mittleren Verbindungsebene (L) der Halbschalen erstreckt, wobei die Hülse (26) zwei Schultern (32, 34) im Anschlag auf den Innenflächen (29; 31) der zwei Halbschalen (14, 16) umfasst.

2. Aufhängungslenker (4) nach Anspruch 1, **dadurch gekennzeichnet, dass** die ersten Ränder (18, 20) und/oder die zweiten Ränder (22, 24) durch Schweißen, bevorzugt durch Laserschweißen, miteinander zusammengebaut sind.

3. Aufhängungslenker (4) nach einem der Ansprüche 1 und 2, **dadurch gekennzeichnet, dass** die zweiten Ränder (22, 24) ein gekrümmtes Profil, das bevorzugt konkav ist, des Lenkers (4) bilden.

4. Aufhängungslenker (4) nach einem der Ansprüche 1 bis 3, **dadurch gekennzeichnet, dass** sich die ersten Ränder (18, 20) mindestens auf einem Teil ihrer Ausdehnung im Allgemeinen parallel zu den zweiten Rändern (22, 24) erstrecken.

5. Aufhängungslenker (4) nach einem der vorhergehenden Ansprüche, **dadurch gekennzeichnet, dass** die Hülse (26) an mindestens einem ihrer Enden einen Flansch (36; 38), der eine der Halbschalen (14; 16) durchquert, umfasst, wobei der Flansch bevorzugt plastisch auf der Außenseite der Halbschale derart zurückgetrieben ist, dass die Befestigung der Hülse (26) an der Halbschale sichergestellt ist.

6. Aufhängungslenker (4) nach einem der vorhergehenden Ansprüche, **dadurch gekennzeichnet, dass** die Hülse (26) an einem ersten Ende (10) des Lenkers liegt, wobei jede der zwei Halbschalen (14, 16) an dem zweiten Ende (12) des Lenkers einen Abschnitt in Berührung mit einem entsprechenden Abschnitt der anderen der zwei Halbschalen umfasst.

7. Aufhängungslenker (4) nach einem der Ansprüche 1 bis 6, **dadurch gekennzeichnet, dass** er außerdem eine Längsanlenkungshülse (27) des Lenkers an dem Fahrzeug umfasst, wobei sich die Hülse im Wesentlichen in der mittleren Verbindungsebene (L) der zwei Halbschalen (14, 16) erstreckt.

8. Aufhängungslenker (4) nach Anspruch 7, **dadurch gekennzeichnet, dass** jede der Halbschalen (14, 16) einen Abschnitt (28, 30) in Form einer gekrümmten Pratze umfasst, wobei die Längshülse (27) zwischen den zwei Abschnitten aufgenommen ist, wobei die Hülse bevorzugt an die Abschnitte (28, 30) geschweißt ist.

9. Kraftfahrzeug, das einen Aufhängungslenker (4) umfasst, **dadurch gekennzeichnet, dass** der Aufhängungslenker einem der Ansprüche 1 bis 8 entspricht, wobei der Lenker (4) gelenkig an der Struktur (6) des Fahrzeugs und an einem Rad des Fahrzeugs montiert ist.

## Claims

1. A suspension arm (4) for a motor vehicle including two half-shells (14, 16) attached to one another along a median joining plane (L) and forming the structure of the arm (4), in which the two half-shells (14, 16) include first attachment edges (18, 20) extending in the median joining plane (L) and in mutual contact in said plane, and second attachment edges (22, 24) extending transversely, preferably perpendicularly, to said plane (L) and in mutual contact in their transverse extent,
**characterized in that** it further includes a transverse sleeve (26) for articulation of the arm (4) to the vehicle, said sleeve extending in the interior of the arm, transversely to the median joining plane (L) of the half-shells, said sleeve (26) including two shoulders (32, 34) in abutment on the interior faces (29; 31) of the two half-shells (14, 16).

2. The suspension arm (4) according to Claim 1, **characterized in that** the first edges (18, 20) and/or second edges (22, 24) are assembled one to the other by welding, preferably by laser welding.

3. The suspension arm (4) according to one of Claims 1 and 2, **characterized in that** the second edges (22, 24) form a curved profile, preferably concave, of the arm (4) .

4. The suspension arm (4) according to one of Claims 1 to 3, **characterized in that** the first edges (18, 20) extend, at least over a portion of their extent, in a generally parallel manner to the second edges (22, 24) .

5. The suspension arm (4) according to any one of the preceding claims, **characterized in that** the sleeve (26) includes at at least one of its ends a flange (36; 38) passing across one of the half-shells (14; 16), said flange being preferably pushed back plastically on the exterior face of said half-shell so as to ensure the attachment of said sleeve (26) to said half-shell.

6. The suspension arm (4) according to any one of the preceding claims, **characterized in that** the sleeve (26) is situated at a first end (10) of the arm, each of the two half-shells (14, 16) including at the second end (12) of said arm a portion in contact with a corresponding portion of the other of the two half-shells.

7. The suspension arm (4) according to one of Claims 1 to 6, **characterized in that** it further includes a longitudinal sleeve (27) for articulation of the arm to the vehicle, said sleeve extending essentially in the median joining plane (L) of the two half-shells (14, 16).

8. The suspension arm (4) according to Claim 7, **characterized in that** each of the half-shells (14, 16) includes a portion (28, 30) in the shape of a curved tab, the longitudinal sleeve (27) being housed between said two portions, said sleeve being preferably welded to said portions (28, 30).

9. A motor vehicle including a suspension arm (4), **characterized in that** the suspension arm is in accordance with one of Claims 1 to 8, the arm (4) being mounted in an articulated manner to the structure (6) of the vehicle and to a wheel of said vehicle.
